# EUROPEAN PATENT APPLICATION

(11) **EP 2 364 759 A2**
(43) Date of publication of application: **14.09.2011**
(21) Application number: 10191425.7
(22) Date of filing: 16.11.2010
(51) Int. Cl.: B01D 19/00

(54) **Separator apparatus and method.**

(30) Priority: 16.11.2009 AU 2009905599; 19.07.2010 AU 2010903210
(71) Applicant: Moffat Pty Limited, Mulgrave, Victoria 3170 (AU)
(72) Inventor: Eaton Willett, Paul, WHITESIDE, Queensland 4503 (AU)
(74) Representative: Texier, Christian

(57) **Abstract**

A liquid separator including a vessel (172), an inlet (174), a first outlet (176), a second outlet (178), a regulating mechanism (180), and a removal mechanism. Within the vessel liquid separates into a lower density fraction floating atop a denser fraction. The inlet receives the liquid into the vessel. The first outlet conveys the denser fraction from the vessel. The second outlet is positioned above the first outlet to convey the floating lower density fraction from the vessel. The regulating mechanism (180) regulates the pressure at the first outlet. The removal mechanism includes one or more sensors, to sense the floating lower density fraction at a first predetermined level above the first outlet, and is responsive to the sensor(s) to remove the floating lower density fraction from the vessel.

## Description

### Field of the invention

This invention relates to separating flowable substances such as cooking by-products. Various embodiments are concerned with liquid-liquid separation, in particular, the separation of immiscible or partially immiscible liquids such as the separation of oils and fats from water. Preferred embodiments of the invention find particular utility in the recovery of oil and fat for biofuel production.

### Background of the invention

To comply with environmental legislation and standards, the generators of waste oils and/or fats (herein after referred to as lipids for convenience) typically provide a system for their recovery and treatment. Recovery and treatment may be as simple as separating out large contaminants (eg pieces of food) and/or separating out water. This latter process is particularly important in environments where waste lipids are produced simultaneously with waste water such that the ultimate waste liquid is a mixture of lipids and water. One such environment is that of an oven for the cooking of chickens that use an induced steam atmosphere to bake. While the invention has wider reaching utility it will be described predominantly with reference to this environment / use.

The most common approach to the recovery and treatment of mixed water and lipids generated as a waste stream from an oven involves collecting the waste in a container under the oven, filtering out the coarse products, and after a predetermined time removing the lipids by moving a vertically disposed wheel or the like through the bath. The lipids and other less dense than water components of the waste adhere to the wheel and are later scraped off and into a further receptacle that must be regularly emptied. The water and any soluble lipids are allowed to pass to the sewer.

There are numerous undesirable features to such a system. The lipids that are recovered using such a system are often contaminated by the inclusion of soluble oils, water and solid matter. This detracts from their suitability for use as a biofuel feedstock. Vegetable oil and animal fat are mainly constituted by triglycerides which are hydrolysed by water to give salts of the fatty acids on the triglycerides instead of biodiesel. Thus, water must be removed because its presence will interfere with transesterification.

From an aesthetic perspective, the system can become unsightly as lipids from the oven drip onto surfaces. From an ergonomic perspective, the system is often difficult to clean because of its fixed installation under the oven. From a safety perspective, the system can become hazardous if the collection device overflows.

It is an object of the invention to provide an improved apparatus and method for treating mixed liquids or at least to provide an alternative for those concerned with treating mixed liquids.

It is not admitted that any of the information in this specification is common general knowledge, or that the person skilled in the art could reasonably be expected to have ascertained or understood it regarded it as relevant or combined it in anyway at the priority date.

### Summary of the invention

One aspect of the invention provides a liquid separator including
a vessel in which liquid separates into a lower density fraction floating atop a denser fraction;
an inlet to receive the liquid into the vessel;
a first outlet to convey the denser fraction from the vessel;
a second outlet positioned above the first outlet to convey the floating lower density fraction from the vessel;
a regulating mechanism to regulate the pressure at the first outlet; and
a removal mechanism including one or more sensors, to sense the floating lower density fraction at a first predetermined level above the first outlet, and being responsive to the sensor(s) to remove the floating lower density fraction from the vessel.

The regulating and removal mechanisms could be wholly or partly integrated. The sensor(s) might sense the mere presence of one of the fractions or alternatively might provide an indication of a characteristic of the liquid, e.g. purity of an accumulated lipid.

The removal mechanism preferably controls the regulating mechanism to increase the pressure at the first outlet to remove the floating lower density fraction from the vessel.

Preferably the regulating mechanism includes a conduit extending from the first outlet to an overflow above the first outlet. The removal mechanism may elevate an overflow portion over which the denser fraction flows to increase the pressure; alternatively the removal mechanism may lower a member onto the portion to increase the pressure.

Optionally the removal mechanism may include an openable closure for selectively closing the second outlet.

Preferably the first predetermined level is below a free surface of liquid in the vessel. Optionally the separator may further include one or more further sensors to detect the denser fraction at a second predetermined level vertically spaced from the first predetermined level, and the removal mechanism may respond to the further sensor(s) by discontinuing the removal of the lower density fraction from the vessel.

Optionally the separator may include a heater.

Another aspect of the invention provides a method of treating a liquid, the method including supplying the liquid to a vessel in which the liquid separates into a lower density fraction floating atop a denser fraction; removing the denser fraction from the vessel; regulating the pressure at a location in the vessel; removing the floating lower density fraction from the vessel in response to sensing the lower density fraction at a first predetermined level above the location in the vessel.

The removing the floating lower density fraction preferably includes increasing the pressure at the location in the vessel.

Preferably, removing the denser fraction from the vessel includes removing the denser fraction via a first outlet; and the increasing the pressure at the location in the vessel includes elevating an overflow downstream of the first outlet. Elevating the overflow may include elevating structure over which fluid flows, or lowering a member onto structure over which fluid flows.

Removing the floating lower density fraction from the vessel may include opening an outlet for the lower density fraction to pass therethrough.

In preferred embodiments, the first predetermined level is below a free surface of liquid in the vessel. The removal of the lower density fraction may be discontinued in response to sensing the denser fraction at a second predetermined level vertically spaced from the first predetermined level.

Also disclosed is a method for the collection and processing of lipid waste.

The method includes the use of a waste collection device and a liquid-liquid separator in fluid communication therewith. Accordingly, also disclosed is a liquid-liquid separator including
- a main chamber for receiving and holding a liquid mixture, the liquid mixture including a first liquid and a second liquid wherein the first liquid is more dense than the second liquid;
- an inlet for entry of the liquid mixture into the main chamber;
- a first outlet positioned in a lower region of the main chamber for removal of the first liquid from the main chamber;
- at least one probe positioned above the first outlet for detecting the characteristics of the liquid mixture;
- retaining means to retain the second liquid in the main chamber; and
- a second liquid removal mechanism for removing the second liquid from the main chamber through a second outlet, the second liquid removal mechanism being activated by the detection of the characteristics of the second liquid reaching a predetermined level.

In an embodiment the retaining means is a first outlet pipe connected to the first outlet and extending to a height greater than an openable second outlet, and the second liquid removal mechanism is the opening of the second outlet disposed within the upper region of the main chamber so that the second liquid in the upper region of the main chamber may exit.

Accordingly there is also disclosed a liquid-liquid separator including
- a main chamber for receiving and holding a liquid mixture, the liquid mixture including a first liquid and a second liquid wherein the first liquid is more dense than the second liquid;
- an inlet for entry of the liquid mixture into the main chamber;
- a first outlet for removal of the first liquid from the main chamber;
- an openable second outlet above the first outlet for removal of the second liquid from the main chamber;
- a first outlet pipe connected to the first outlet and extending to a height greater than the second outlet; and
- at least one probe positioned above the first outlet for detecting the characteristics of the liquid mixture and opening the second outlet when the characteristics reach a predetermined level.

In another embodiment, the retaining means is a first outlet pipe extending to a height lower than the second outlet, and the second liquid removal mechanism is the adjustment of the liquid level within the main chamber so that second liquid in the upper region of the main chamber overflows a weir or into an open outlet.

Also disclosed is a liquid-liquid separator including
- a main chamber for receiving and holding a liquid mixture, the liquid mixture including a first liquid and a second liquid wherein the first liquid is more dense than the second liquid;
- an inlet for entry of the liquid mixture into the main chamber;
- a first outlet for removal of the first liquid from the main chamber;
- a first outlet pipe connected to the first outlet;
- an open second outlet above the first outlet for removal of the second liquid from the main chamber, the first outlet pipe extending to a height lower than the second outlet; and
- at least one probe positioned above the first outlet for detecting the characteristics of the liquid mixture and raising the first outlet pipe to a height greater than the second outlet when the characteristics reach a predetermined level.

In operation, the liquid mixture enters the main chamber through the inlet, and the first liquid and the second liquid (which have different densities and are at least partially immiscible) begin to separate (with time and under the influence of gravity). The second, less dense, liquid tends to move towards the top or upper region of the main chamber, while the first, more dense, liquid tends to move towards the bottom or lower region of the main chamber. At the very top of the main chamber will be second liquid of the greatest purity, with the purity decreasing progressively towards the bottom of the main chamber (which is predominantly the first liquid). Thus, there is a purity gradient wherein the lower density liquid is most pure towards the top of the main chamber. An advantage of preferred embodiments of the invention is that it is possible to only withdraw, or remove from the main chamber, that portion of the second liquid that has purity above a desired level.

This advantage is achieved by the combination of the probe, which measures the purity, and the height of the first outlet pipe, which is controlled so that the pressure at the first outlet (which affects the height of liquid mixture in the main chamber) is controllable and predetermined.

In the first embodiment, the height of an overflow defined by the first outlet pipe is greater than that of the openable second outlet, the second outlet in this embodiment incorporates a mechanism for selectively restricting and allowing flow therethrough (such as a valve or a pump) and is positioned above the first outlet, preferably somewhere within the upper region of the main chamber below the level of the liquid mixture and is closed in its normal operation (ie when the second liquid is not being removed).

In the second embodiment, the height of the first outlet pipe is lower than that of the open second outlet, the second outlet in this embodiment being a weir or opening positioned somewhere towards the top of the upper region of the main chamber above the level of the liquid mixture.

In both embodiments, the first outlet pipe supports a column of the first (denser) fluid to control the pressure at the first outlet. The effective height of the column is the difference in elevation of the first outlet and the free fluid surface defined by the overflow structure at the other end of the outlet pipe. The pressure at the outlet is the product the density of the first (denser) fluid, gravity (9.8 ms⁻²) and the effective height of the column (P = pgh). The significance of the height of the first outlet pipe being controllable and/or predetermined is that the pressure at the first outlet is controlled.

ln normal operation the pressure is typically maintained at a constant "regulation" pressure. As new liquid mixture enters the main chamber through the inlet, only the first liquid is able to exit the main chamber (by way of the first outlet) while the second liquid is retained within the main chamber until it is intentionally released. This has the effect that the amount of second liquid at the top, and the purity of this second liquid at any particular height, of the main chamber progressively increase as new liquid mixture is fed to the main chamber and first liquid is removed from the main chamber.

Once the purity of the second liquid at the height of the probes reaches the desired purity level (e.g. once a separation complete indicator is detected), the second liquid removal mechanism is activated. In the first embodiment, the second liquid removal mechanism is that the second outlet is opened and the second liquid with the desired purity level or higher is withdrawn from the main chamber. In the second embodiment, the second liquid removal mechanism is that the height of the first outlet pipe is raised to be higher than that of the second outlet, so that as new liquid enters the main chamber the pressure at the first outlet increases and the level of the fluid in the main chamber rises thus driving the second liquid (with the desired purity level or higher) upwardly toward the second outlet to exit the main chamber.

It may take several hours for the purity of this second liquid to reach the desired level. This of course depends on a range of factors including the desired purity level and the characteristics of the incoming fluid mixture.

In the example where the separator is for the separation of water and lipids, preferred embodiments not only separate the lipids from the water, but also control the purity of the lipids (ie the degree of separation). This is achieved, as described above, by the first outlet pipe slowly releasing water while no lipid is ever released until it is sufficiently pure. This is different to certain fat separators of the prior art which gravity separate lipid and water but retrieve the fat from the surface by an overflow arrangement or a skimming arrangement with no regard to its purity. In these prior art systems, adding more liquid mixture to the main chamber results in the lipids being pushed upwards. According to various embodiments of the present invention adding more liquid mixture to the main chamber drives the first (denser) fluid from the main chamber. The height of liquid mixture in the main chamber varies as the composition, and thus the density, of the fluid in chamber varies while the lipids penetrate downwards to thus occupy a greater proportion of the main chamber.

The liquid mixture is preferably fed to the main chamber via a vented inlet. Preferably, the liquid mixture is fed from a collection device such as that used to collect the waste generated during cooking of meat. A baffle or other flow energy dissipation device may be placed at or near the location of the inlet such that the disruption to the liquid mixture already in the main chamber caused by newly entering liquid mixture is minimised.

In the first embodiment where the second outlet incorporates a restriction/blocking mechanism, it is preferable that the height of the overflow defined by the first outlet pipe is such that there is a substantial height difference between the second outlet and the height of the liquid mixture within the main chamber. For instance, the height difference between the second outlet and the height of the liquid mixture within the main chamber might be of the same order of magnitude as that between the second outlet and the base of the main chamber, or the first outlet. Maintaining this height difference will allow sufficient depth of second liquid to generate in the upper region of the main chamber.

In the second embodiment where the second outlet is a weir or opening above the normal operating level of the liquid mixture (ie when second liquid is not being removed), the height of the overflow defined by the first outlet pipe is elevated from a position at or below the height of the second outlet, preferably to a height above the height of the second outlet, so that the second liquid can exit the main chamber through the second outlet. The movement of the first outlet pipe is activated by the probes, and effected by any mechanical mechanism as known to those skilled in the art, for instance, a gear mechanism. As well as the height of the first outlet pipe being raised to remove second liquid from the main chamber, the height of the first outlet pipe can be lowered to stop removal of second liquid from the main chamber, for instance, when the probes indicate the purity of the second liquid has dropped to a predetermined level. Holding the height of the first outlet pipe some distance below the height of the second outlet will allow sufficient depth of second liquid to generate in the upper region of the main chamber.

Preferably in this aspect, the first outlet is towards or at the base of the main chamber to reduce or remove stagnant or wasted regions below the first outlet. Preferably, the inlet is towards the bottom of the main chamber such that the separated second liquid is less disturbed by the incoming liquid mixture, but sufficiently higher than the first outlet so that the liquid mixture has a sufficient residence time within the main chamber to separate and is not short-circuited directly from the inlet to the first outlet.

Preferably in this aspect, the characteristic detected by each probe is the concentration of the first liquid in the second liquid. Each probe may be replaced by some other form of sensor, e.g. a sensor that detects a condition of the liquid mixture by optical, chemical, electrical and/or physical means. According to a simple form of the invention the sensor might include a float, e.g. a float having a density selected to track the free surface of liquid in the vessel, in which case the removal mechanism might be a simple mechanical float valve incorporating the float and arranged to open the second, lower density fraction, outlet in response to liquid in the vessel accumulating to a predetermined height.

In the embodiment where the first liquid is water and the second liquid is lipid it is preferable that the probe is one that performs a Karl Fischer titration to determine the water content of the lipid. Preferably, the sensors measure the electrical resistance of the fluid in the vessel.

In this aspect, the purpose of the probe is to detect the characteristics of the liquid mixture, and in response activate the second liquid removal mechanism (eg opening the second outlet and/or raising the height of the first outlet pipe) when the characteristics reach a predetermined level (ie the separation complete indicator (eg a desired purity level)). It is possible to adjust the predetermined level so that the requirements for opening the second outlet are, for instance, more or less stringent. For example, in embodiments where the first liquid is water and the second liquid is lipid, the purpose of the probe can be to measure the amount of water in the lipid at the location of the probe and to activate the second liquid removal mechanism when the amount of water in the lipid drops to a predetermined level, ie when the lipid reaches the desired level of purity. Thus, the position of the probe with respect to the second outlet is important. The further the probe is below the second outlet, the greater the certainty that the second liquid exiting through the second outlet is of a certain purity (or greater). However, in certain embodiments the probe may be near to, or above, the second outlet without compromising the working of the liquid-liquid separator.

However, in this aspect it is more preferred that the probe be below the second outlet. In this case, second liquid withdrawn through the second outlet once opened in response to measurements taken by the probe reaching a predetermined level will always have purity greater than the predetermined level.

In some embodiments of this aspect there are at least 2 probes. In the embodiment where there are 2 probes, which may be vertically and/or horizontally disposed with respect to each other, it is possible for the system to be operated such that a common reading is required by both probes before the second outlet is opened. Such a system would reduce the risk of probe malfunction leading to premature activating the second liquid removal mechanism (ie before the desired purity of the second liquid has been reached). Likewise, if a common reading is not provided, and instead an uppermost probe indicates a higher water volume than a lowermost probe, the system can indicate a fault.

The probe of this aspect may be connected to a computer to monitor the process, and to allow for real-time setting of the predetermined level at which the second liquid removal mechanism is activated.

In this aspect, a heating element may be included. The heating element is preferably disposed towards the top of the main chamber to ensure, in the case where the second liquid forms a solid at room temperature, that entrapped first liquid is able to separate under the influence of gravity and that the second liquid is of a flowable and/or pumpable nature. In embodiments where the first liquid is water and the second liquid is lipid the heating element preferably heats the liquid mixture to about 60 °C. The heating element may be any known in the art but is preferably of the Calrod type. A temperature probe of any type known in the art may also be included to measure, and assist with regulation of, temperature.

ln some embodiments of this aspect, a further outlet is provided at the base of the main chamber to remove solids (eg proteins) originally present in the liquid mixture that accumulate. This further outlet is preferably in the form of a valve that can be opened during cleaning, or whenever necessary, to remove the accumulated solids. This further outlet preferably remains closed during normal operation of the separator. In these embodiments, the first outlet can be raised slightly from the base of the main chamber so that solids accumulate for later removal rather than proceed through the first outlet pipe.

In preferred embodiments of this aspect, the first liquid is water and the second liquid is lipids. More preferably, the liquid mixture is a water lipid mixture obtained from the roasting of meats, for instance, the roasting of chickens on a commercial scale.

In the context of this invention, a pure second liquid is one in which the concentration of the first liquid is minimised or reduced to a desirable level. In embodiments where the first liquid is water and the second liquid is lipid, the water and lipids may also include some entrained particulates and some water soluble lipids. Thus, despite the use of the term 'separation complete indicator', the separation need not be complete in the absolute sense, but refers instead to a predetermined acceptable level of completeness.

In another aspect of the invention there is provided a collection device for collecting liquid mixture generated during cooking, the collection device including
- a tank for receiving and holding the liquid mixture;
- a pump for pumping the liquid mixture from the tank, the pump being (a) pivotal about a first axis, and (b) movable between a first position in contact with the liquid mixture within the tank and a second position not in contact with the liquid mixture; and
- a door being (a) hinged at a second axis, and (b) operable between an open position allowing the tank to be at least partially removed from the collection device and a closed position;
wherein movement of the door about the second axis from the closed position to the open position results in movement of the pump about the first axis from the first position to the second position.

In a preferred embodiment of this aspect, movement of the pump from the first position to the second position results in the pump being removed from the tank such that the tank can be at least partially removed from the collection device (eg for cleaning). In this embodiment the tank and filter basket are able to be safely and easily removed for cleaning.

Preferably, the second axis is preferably the hinge for a downward opening door. Pivotal about to this second axis is a second crank or extension component (ie a lever) that moves with the door. Further, the first axis is preferably the point at which the pump interacts with the collection device and about which the pump pivots. A first crank or extension component (ie a lever) is pivotal about this first axis. The pivot of the pump from a position within the liquid mixture in the tank, assuming the tank is not empty, to one not in contact with the liquid mixture, and preferably not within the tank, is achieved by connecting the distal end of the first crank to the distal end of the second crank by a rod. Then, opening of the door about the second axis causes the second crank to apply force to the rod, which in turns applies force to the first crank, which in turn pivots the pump about the first axis and away from any liquid mixture residing in the tank. In this embodiment, the opened door advantageously acts as a surface upon which the tank can be slid and guided during removal. In other embodiments, the second axis is the hinge for an upward opening door. The first crank, second crank and rod may be of any shape that allows the opening the door to transfer force to move the pump about the first axis. That is, the first crank, second crank and rod need not be tubular or cylindrical, although this is preferred, but can be of any dimension suitable for placement within the collection device. Additionally further components may be included, for instance to provide greater mechanical advantage and/or as required by the design of the collection device.

The collection device of this aspect may further include a switch that is dependent upon the presence of the tank within the collection device for its operation. That is, the switch may be used to the pump does not operate unless the tank is in position. The presence of the switch may also facilitate a feature of the design wherein a computer is used to record input as to when the tank was removed for cleaning, and to indicate when cleaning is overdue.

In preferred embodiments of this aspect, the collection device further includes a filter for removing from the liquid mixture at least a portion of any particulate matter present before it enters the tank.

A fluid level probe of any type known in the art could be included to signal to the pump when the liquid mixture has reached a maximum level and now requires pumping to avoid overflow. Preferably, the fluid level probe is attached to the pump, or to the assembly including the pump, so that it too is movable through the operation of the door. A further advantage is that a warning can by activated by the computer should the liquid mixture fail to fall if the pump has been running for a set period, as this would signal a fault in either the pump or the fluid level probe. Preferably the pump is set to substantially empty the tank each time it is operated.

A heating element may be included. In these embodiments, the heating element is preferably disposed near to the pump to ensure, in the case where the liquid mixture is a solid at room temperature, that the liquid mixture is of a pumpable nature. In embodiments where the liquid mixture is from the cooking of meat the heating element preferably heats the liquid mixture to about 60 °C. The heating element may be any known in the art but is preferably of the Calrod type. A temperature probe of any type known in the art may also be included to measure, and assist with regulation of, temperature. The heating element and temperature probe are also preferably attached to the pump, or to the assembly including the pump, so that it too is movable through the operation of the door.

A catch tray may be provided under the tank. The catch tray may be an integral part of the structure of the collection device itself, as opposed to a separate component. The catch tray serves to catch any overflow and direct it to a drain or other storage location. Alternatively an overflow pipe can be fitted to the side of the tank. A hose could be connected to this overflow pipe, or preferably a tongue dish fitted under the outlet of the overflow pipe to catch overflow. The catch tray and the latter overflow pipe and tongue dish embodiments allow the tank to be removed without needing to disconnect a drain hose.

A condensation dome may be placed above the tank and within the collection device. Alternatively, the condensation dome may be an integral part of the structure of the collection device itself, as opposed to a separate component. Preferably, this condensation dome is designed such that it acts as a funnel into the tank. Such a condensation dome provides at least 2 advantages: (1) it provides an area for the pump to be hidden from regular view when the door is open (eg so that the tank can be withdrawn) and (2) it can be designed such that vapours can condense on its internal surfaces and thereafter flow into the tank. A vapour outlet may be provided to accommodate any vapour that does not condense.

In preferred embodiments of this aspect, the liquid mixture is a water lipid mixture obtained from the roasting of meats, for instance, the roasting of chickens on a commercial scale. Preferably, the liquid mixture is then subjected to separation to recover lipids, for instance, in the above liquid-liquid separator.

In another aspect of the invention there is provided a water-lipid mixture separation system for an oven including
(a) a collection device; and
(b) a separator according to the above aspects;
wherein the collection device collects the water-lipid mixture which is then transferred to the liquid-liquid separator.

Also disclosed is a process for separating a first liquid from a second liquid in a liquid mixture, the first liquid being more dense than the second liquid, the process including the steps of
- feeding a liquid mixture to a main chamber of a liquid-liquid separator, the main chamber having an upper region and a lower region;
- separating at least a portion of the second liquid from the first liquid, the separated portion of the second liquid being in the upper region of the main chamber;
- removing at least a portion of the first liquid from the lower region of the main chamber, so that the ratio of second liquid to first liquid in the main chamber is increased;
- detecting a separation complete indicator, and;
- in response to the detection, activating a second liquid removal mechanism to remove at least a portion of the second liquid from the upper region of the main chamber.

Also disclosed is a process for separating a first liquid from a second liquid in a liquid mixture, the first liquid being more dense than the second liquid, the process including the steps of
- feeding a liquid mixture to a main chamber of a liquid-liquid separator, the main chamber having an upper region and a lower region;
- separating at least a portion of the second liquid from the first liquid, the separated portion of the second liquid being in the upper region of the main chamber;
- retaining substantially all of the second liquid in the main chamber, while removing at least a portion of the first liquid from the lower region of the main chamber, so that the ratio of second liquid to first liquid in the main chamber is increased; and
- removing at least a portion of the second liquid from the upper region of the main chamber using a second liquid removal mechanism activated by detection of a separation complete indicator;
wherein the step of retaining substantially all of the second liquid in the main chamber is achieved by maintaining the height of the liquid mixture in the main chamber to be lower than the top of the main chamber.

Preferred embodiments of the process further includes the step of deactivating the second liquid removal mechanism so that the removal of second liquid from the main chamber ceases. In some embodiments, the second liquid removal mechanism may be deactivated by closing the second outlet. In other embodiments, the second liquid removal mechanism may be deactivated by lowering the first outlet pipe to a height less than the second outlet.

Some variations of the disclosed arrangements provide:
- a liquid-liquid separator that provides the user with control over the purity of at least one of the liquids recovered;
- a waste collection device that is readily cleanable by more easy removal of the predominant waste contacting components;
- a waste collection device that is more aesthetically pleasing than those of the prior art, in at least the fact that waste is predominantly hidden from regular view; and
- a waste collection device that is safer than those of the prior art, in at least the fact that waste is predominantly contained within the collection device even in the event of an overflow.

### Brief description of the drawings / figures

The figures illustrate various exemplary arrangements.
Figure 1 shows a side view of an oven and a collection device;
Figure 2 shows a cross-sectional side view of a collection device in a closed position;
Figure 3 shows a cross-sectional side view of a collection device in an open position;
Figure 4 shows a front view of an oven, and a collection device connected to a liquid-liquid separator;
Figure 5 shows a cross-sectional view of a liquid-liquid separator;
Figure 6 shows a plan view of two ovens with respective collection devices connected to a liquid-liquid separator;
Figure 7 shows a side view of an oven, collection device, and liquid-liquid separator;
Figure 8 shows a cross-sectional side view of a collection device in a closed position;
Figure 9 shows a cross-sectional view of a liquid-liquid separator;
Figure 10 shows a magnified cross-sectional view of the upper portion of the liquid-liquid separator in the normal operating mode;
Figure 11 shows a magnified cross-sectional view of the upper portion of the liquid-liquid separator of Figure 9 in the lipid removal mode;
Figure 12 shows a cross-sectional view of a liquid-liquid separator inclined for cleaning;
Figure 13 is a cross-sectional view illustrating an overflow ; and
Figure 14 is a schematic elevation view of a separator.

### Detailed description of the preferred embodiments

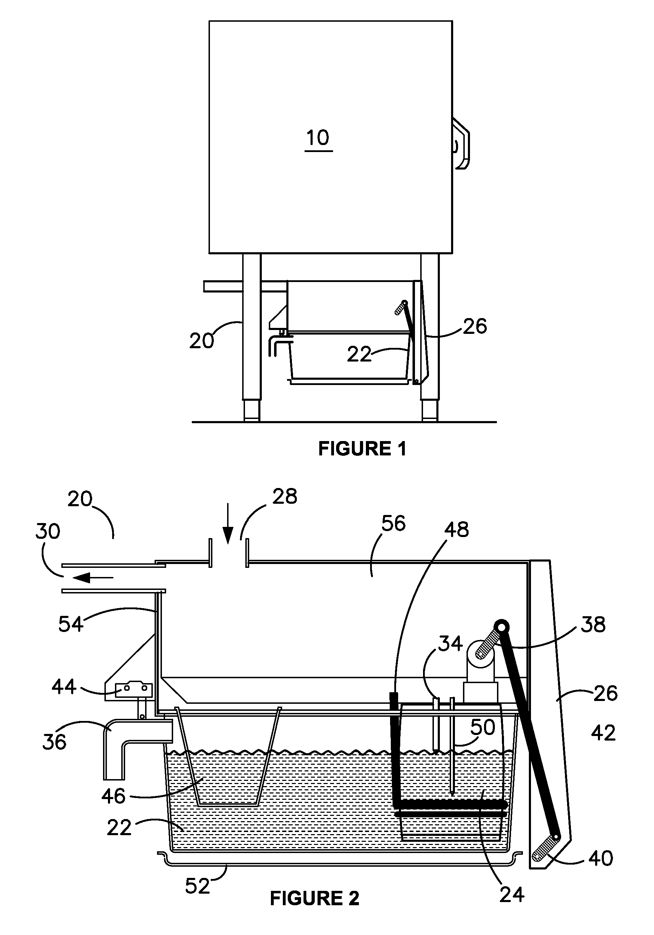

Figure 1 shows the positioning of a collection device 20 beneath an oven 10. In use, the oven 10 is loaded with a batch of meat (for example chickens), and steam is introduced into the oven 10 as the meat cooks. As the bake continues, the steam condensate and lipids from the meat (the liquid mixture) drain to tank 22 in collection device 20.

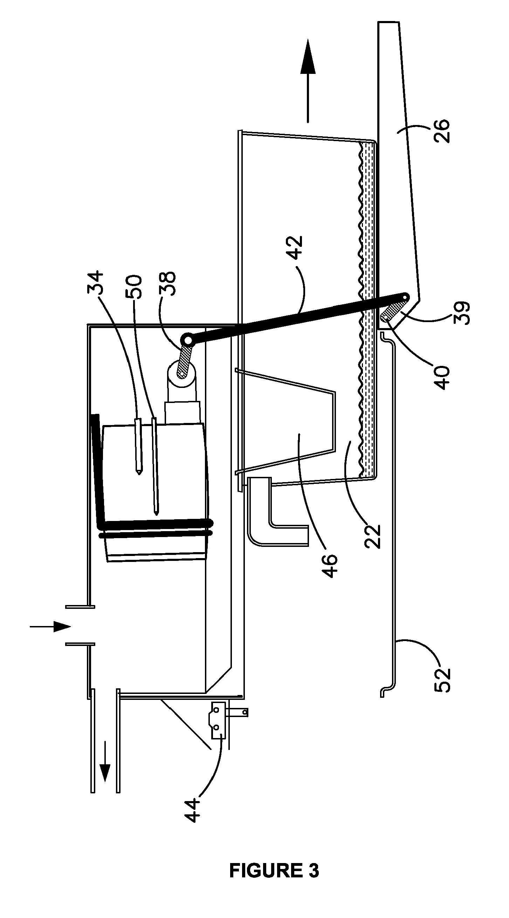

Figures 2 and 3 show the collection device 20 in greater detail. Liquid mixture enters the collection device 20 via inlet 28. Before entering tank 22 they first pass through condensation dome 56, which has walls 14, and filter 46. Liquid mixture entering the condensation dome as a vapour either condenses to tank 22 or passes from the collection device through vapour outlet 30. Liquid mixture continues to feed to tank 22 until it reaches the fluid level probe 34, which activates pump 24 to pump the liquid mixture out of tank 22. Pump 24 is shown with a heating element 48 wrapped around the pump intake, and a temperature probe 50 also housed on the pump body. These components regulate the liquid mixture's temperature in the vicinity of the pump intake to about 60 °C.

In a commercial setting, the tank 22 and filter 46 must be able to be safely and easily removed for cleaning at weekly or otherwise predetermined intervals. To permit this, pump 24, fluid level probe 34, heating element 48 and temperature probe 50 are raised up out of the tank when the door 26 is lowered. The tank 22 and filter 46 can then be withdrawn using the inside of the door 26 as a slide.

Door 26 is able to lift pump 24 by virtue of the arrangement and connection of the first axis 38, second axis 40, and the connecting rod 42 positioned therebetween. In the embodiment shown in Figures 2 and 3, the second axis 40 is the hinge for a downward opening door 26. Attached to this second axis 40 is a first crank 35 that moves with the door 26. Further, the first axis 38 is the point at which the pump 24 interacts with the collection device 20 and about which the pump 24 pivots. A second crank 41 extends from this first axis 38. The pivot of the pump 24 is achieved by connecting the distal end of the first crank 39 to the distal end of the second crank 41 by the rod 42. Then, opening of the door causes the first crank 39 to apply force to the rod 42, which in turns applies force to the second crank 41, which in turn pivots the pump 24 about the first axis 38 and away from any liquid mixture residing in the tank 22.

Figures 2 and 3 also display switch 44 which is used to indicate that tank 22 is in a position where pump 24 can operate (ie the tank 22 is in the collection device 20). A tray 52 under the tank 22 is fitted with a drain pipe (not shown) that allows any overflow to go to a drain. Alternatively, an overflow pipe 36 can be fitted to the side of tank 22 and a tongue dish (not shown) fitted under the outlet of the overflow pipe 36. This allows the tank to be removed without the need for the drain hose (not shown) to be disconnected.

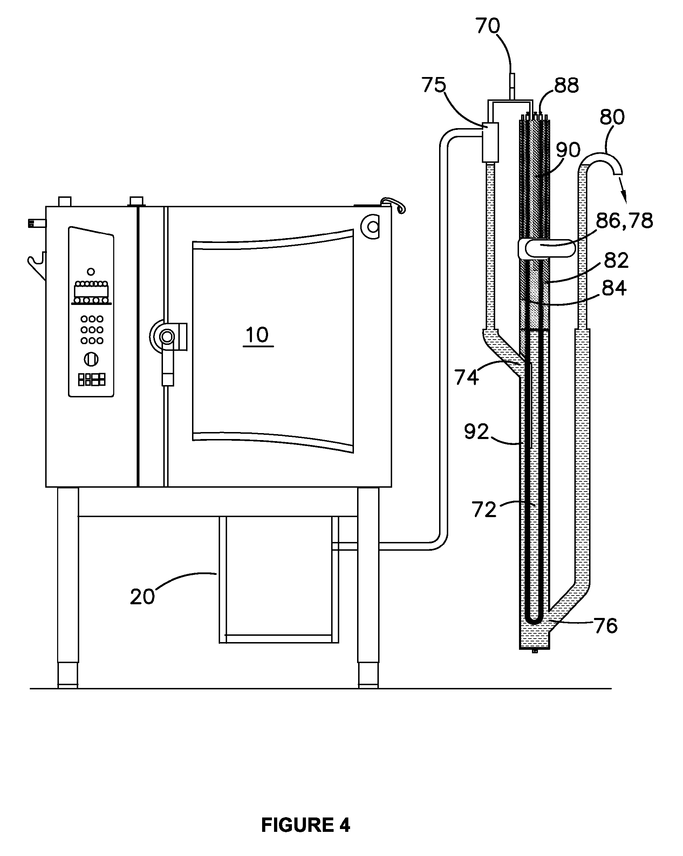

Figure 4 shows the positioning of a collection device 20 beneath an oven 10, the collection device 20 being connected to a liquid-liquid separator 70. In use, the oven 10 is loaded with a batch of meat (for example chickens), and liquid mixture passes from the oven to collection device 20. The liquid mixture is then passed to liquid-liquid separator 70 where lipids are separated from water.

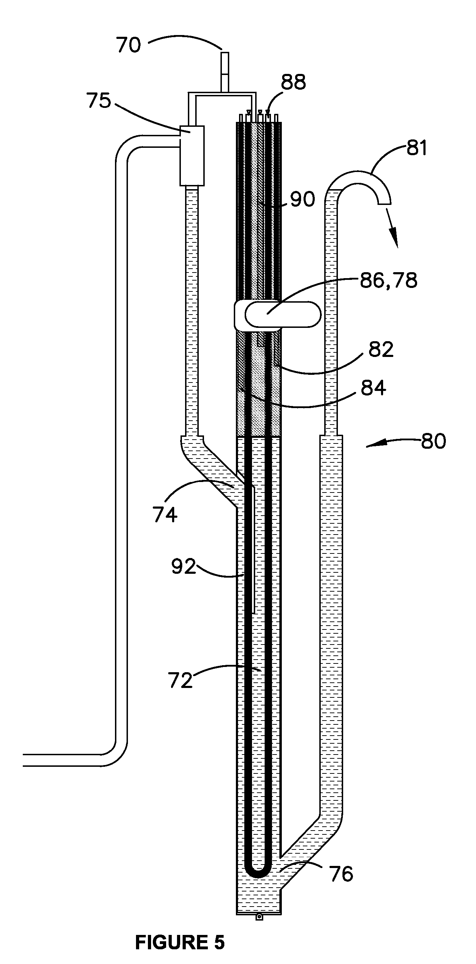

Figure 5 shows the liquid-liquid separator 70 in greater detail. Liquid mixture enters the separator's main chamber 72 through inlet 74, via a vented inlet chamber 75. In this embodiment the main chamber is an upright cylindrical tank. A baffle 92 constitutes means to limit disruption to the already separating liquid mixture by the incoming charge of liquid mixture. A heating element 88 and a temperature probe 90 are also shown. These components regulate the liquid mixture's temperature to about 60 °C. The pressure at the outlet 76, which in turn affects the level of liquid mixture within the main chamber 72, is set by the height of the first outlet pipe's overflow structure 81. The outlet pipe 80 and its overflow 81 thus constitute a regulating mechanism for regulating the pressure at the outlet 76.

The liquid mixture from the cooking of meat includes lipids and water, amongst other less predominant components. As the liquid mixture enters the main chamber 72, the lipids will rise to the top as they are less dense and the water will fall to the bottom as it is more dense. As more liquid mixture is fed to the main chamber 72, excess water exits through the first outlet 76 and the first outlet pipe 80 and a high mounted second outlet 78 (for removing lipids) remains closed. The second outlet 78 incorporates a dump valve 86 which remains closed until the lipid purity is at the desired level. Thus, lipid accumulates in the top region of main chamber 72 until the dump valve 86 of the second outlet 78 is opened.

Probes 82 and 84 sense the amount of first liquid in the liquid mixture, and as the separation process continues the second liquid (lipids) in the upper region of the main chamber 72 becomes purer (freer from the first liquid (water)). The process of separation continues with the purer lipid settling at the top of the main chamber 72. As the proportion of purer lipid in the main chamber 72 increases:
(1) the interface between lipid and water moves downward; and
(2) the upper free surface of fluid in the vessel (i.e. the top of the lipid) moves upward.

This movement can be tracked to provide an indication of a characteristic (e.g. quantity or purity) of the accumulation of lipid. Each of the height of the interface and the height of the upper free surface relative to the first outlet, when the first outlet is at the regulation pressure, thus provide an indication of the characteristic of the accumulated lipid. As the lipid penetrates downwards, it eventually reaches probes 82 and 84. When both probes 82 and 84 sense that there is sufficient lipid in the liquid mixture at the probes' respective predetermined levels the second outlet's dump valve 86, is opened to release the purer lipid from the main chamber 72. The probes 82,84 and dump valve 86 thus together constitute a removal mechanism. The released lipid may simply flow under gravity, or a pump might be employed.

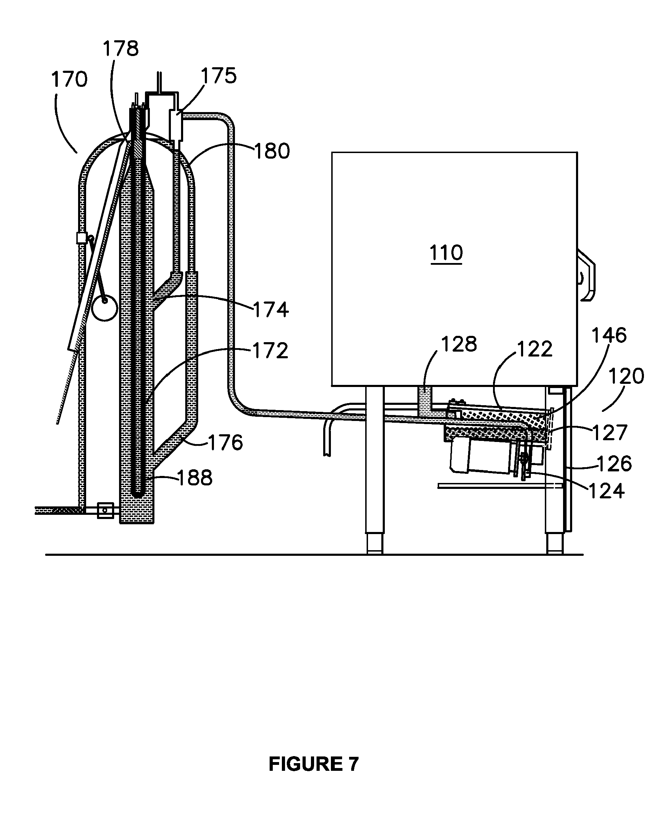

Figures 7 to 12 show another embodiment of the present invention.

Figure 7 shows the positioning of a collection device 120 beneath an oven 110, and the fluid communication between the collection device 120 and the liquid-liquid separator 170. In use, the oven 110 is loaded with a batch of meat (for example chickens), and steam is introduced into the oven 110 as the meat cooks. As the bake continues, the steam condensate and lipids from the meat (the liquid mixture) drain to tank 122 in collection device 120. Liquid mixture then passes to liquid-liquid separator 170 for separation of lipids from water.

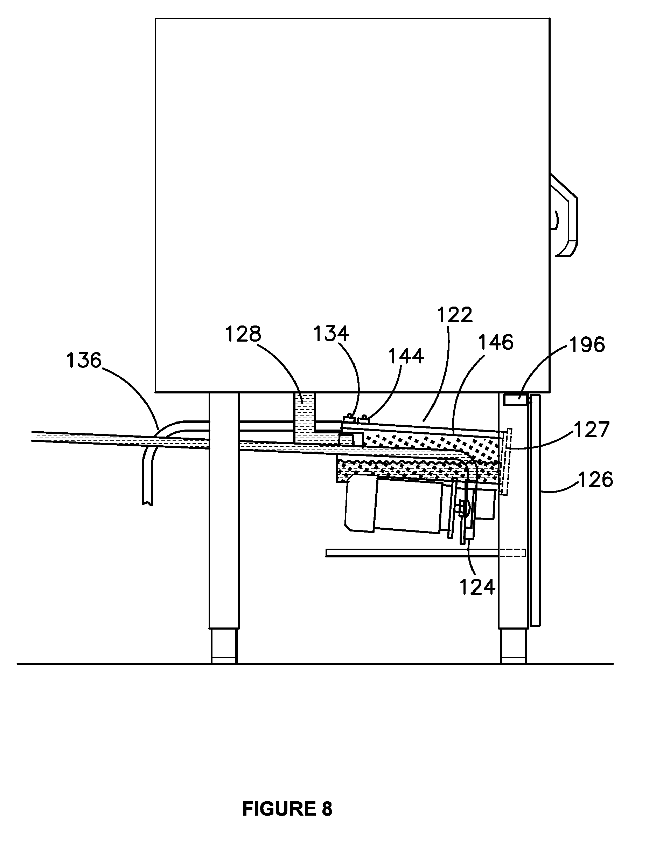

Figure 8 shows the collection device 120 in greater detail. Liquid mixture enters the collection device 120 via inlet 128. Liquid mixture feeds into tank 122 until the height of reaches the fluid level probe 134, which activates pump 124 to pump the liquid mixture out of the collection device, thus substantially emptying the collection device. Before reaching pump 124, liquid mixture passes through filter 146.

In a commercial setting, the tank 122 and filter 146 must be able to be safely and easily removed for cleaning at weekly or otherwise predetermined intervals. To permit this, door 126 and front access plate 127 can be opened.

Figure 8 also displays switch 144 which is used to indicate that filter 146 is in a position where pump 124 can operate. An overflow pipe 136 can be fitted to the side of tank 122 and a tongue dish (not shown) fitted under the outlet of the overflow pipe 136. Switch 196 also indicates the door 126 is closed.

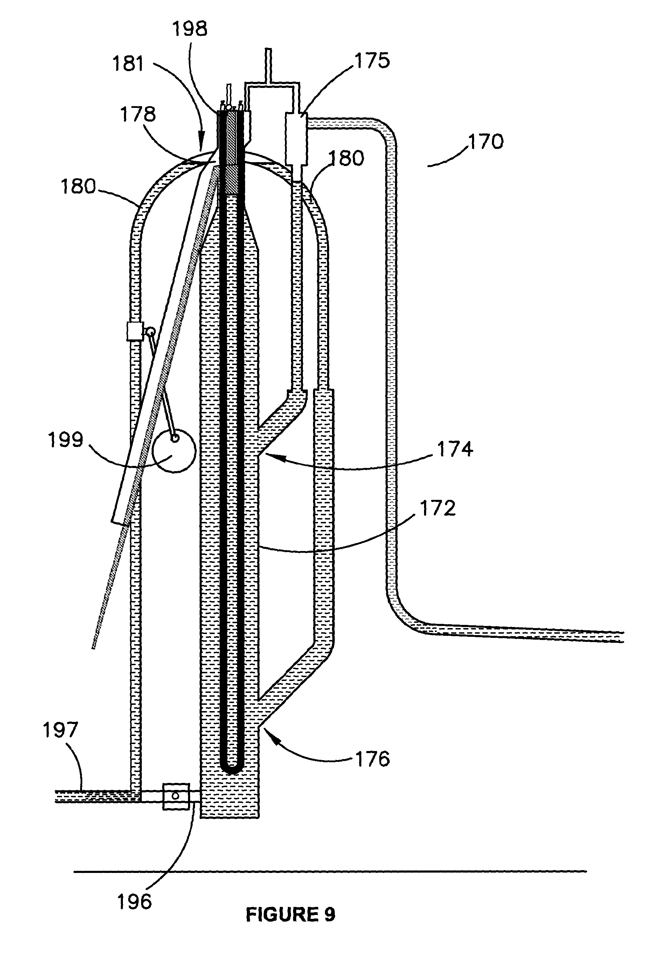

Figures 9, 10 and 11 show the liquid-liquid separator 170 in greater detail. Liquid mixture enters the liquid-liquid separator 170 through inlet 174 via a vented inlet chamber 175. The liquid mixture enters the main chamber 172 which is a cylindrical tank. The level of liquid mixture within the main chamber 172 is set by the height of first outlet pipe 180 and its overflow structure 181 (to be described). A heating element 188 and a temperature probe 190 are also shown. These components regulate the liquid mixture's temperature to about 60 °C. The top of the separator 170 is shown with a rectangular top section 198. On top of this top section there is a screwed on access plate to which the heating element 188, probes 182 and 184, temperature probe 190, and water sprayer 194 are connected.

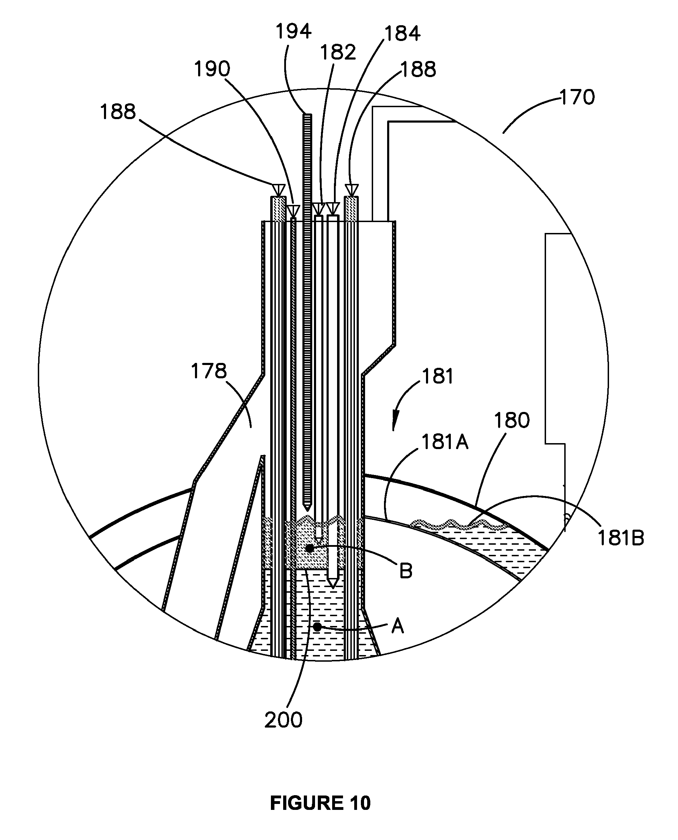

With reference to figure 10, in a normal operating mode, the outlet pipe 180 is positioned to define an overflow structure 181 which defines a free fluid surface 181 B (i.e. a surface exposed to atmospheric pressure). The overflow 181 is defined by a portion of tube surface 181A. In operation water displaced from the main chamber 172 via the outlet 176 travels upwardly through the pipe 180, spills over portion 181A then continues downwardly along the pipe 180 to wastewater pipe 197. Typically, pipe 197 directs the water toward a drain which ultimately leads to a sewer.

Optionally, a portion of the pipe 180 above the portion 181A might be vented to prevent a siphon forming in the pipe 180.

Probes 182 and 184 sense the amount of first liquid in the liquid mixture, and as the separation process continues the second liquid (lipids) in the upper region of the main chamber 172 becomes purer (freer from the first liquid (water)). The process of separation continues with the purer lipid settling at the top of the main chamber 172. As the volume of purer lipid increases, it penetrates downwards (i.e. the interface 200 between the water A and lipid B moves downwardly).

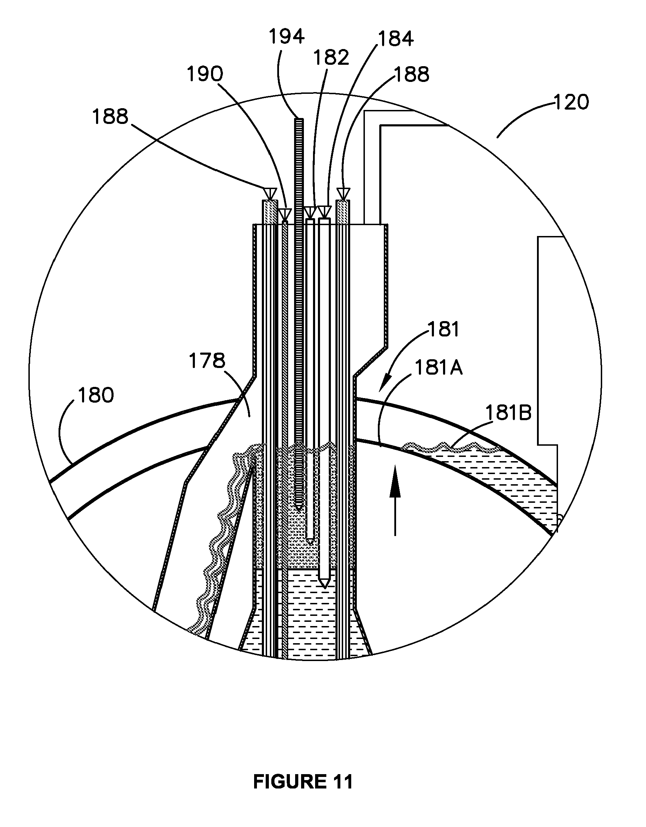

When the probes 182 and 184 are fully immersed in lipid, the separator 170 and its controller (not shown) enters a lipid removal mode in which the height of the first outlet pipe 180, and in particular portion 181A, is raised above that of the second outlet 178. In the lipid removal made, as fluid continues to enter the vessel the pressure at the outlet 176 increases, thus elevating the accumulated lipid B and the free surface 181B, until the free surface 181B reaches the portion 181A in its new elevated position (see figure 11). The new elevated position of portion 181A is selected so that the lipid is elevated to fall over the weir like outlet 178, thus releasing the purer lipid from the main chamber 172 by overflowing into the second outlet 178.

In this embodiment when there are two operating positions (or modes) in which:
(a) the height of the first outlet pipe 180 is below that of the second outlet 178 (the normal, operating, mode) and
(b) the height of the first outlet pipe 180 is above that of the second outlet 178 (the low density fraction removal mode),
as shown in Figures 10 and 11 respectively. Gear mechanism 199 is shown in Figure 9 as a means of moving the height of the first outlet pipe 180.

In the low density fraction removal mode, as the lipid B exits the chamber, the interface 200 rises. When the upper probe 182 detects that its tip is fully immersed in water B the removal mechanism controls the regulation means to lower the pressure at the outlet 176 by lowering the overflow 181 and thus the separator 370 returns to its normal operating mode. In this embodiment the lower extent of probe 182 is about 12mm below the dump weir 178.

The fat that has gathered in the top of the tower therefore is dumped. A small amount of water may also be dumped but will settle out and can be drained off from the bottom of the fat storage tank (not shown).

Thus in the embodiment of figures 9, 10 and 11, the outlet pipe 180 with its overflow portion 181 constitutes a pressure regulating mechanism and the probes 182, 184 and gear mechanism 199 together constitute a removal mechanism which controls the regulating mechanism to increase the pressure at the first outlet to remove the lower density fraction from the vessel. A spraying jet 194 is shown to be used to clean the probes 182 and 184 of any residual lipid build up. The water sprayed on the probes then further serves to flush out the lower parts of the main chamber 172 and its components through further outlet 196.

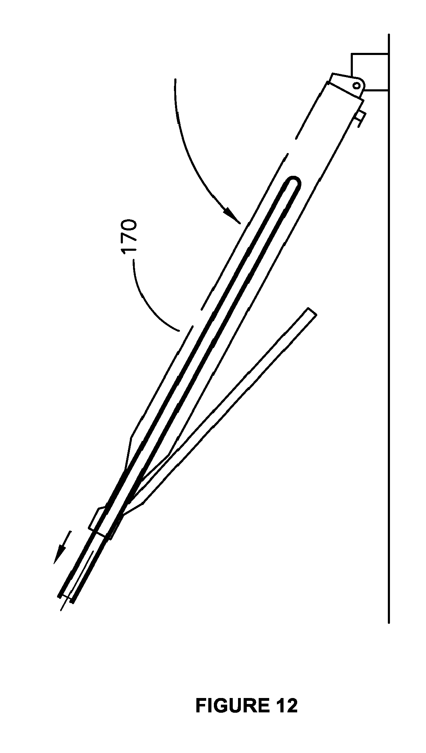

In Figure 12, the liquid-liquid separator 170 is shown hinged from its base. This makes the removal of all serviceable components, and cleaning, easier.

The lipids and water are typically separated over a period of 1 to 2 hours, as this is the time required for probes 82 and 84 to register the requisite purity level. However, this separation time will depend on the design of the liquid-liquid separator and its operating conditions (eg liquid mixture flow rate and the nature of the liquid mixture).

When the oven has finished baking, the oven goes through a cleaning cycle using detergent to rinse and clean the oven internals. This cleaning water and detergent can then be passed through the collection device and liquid-liquid separator.

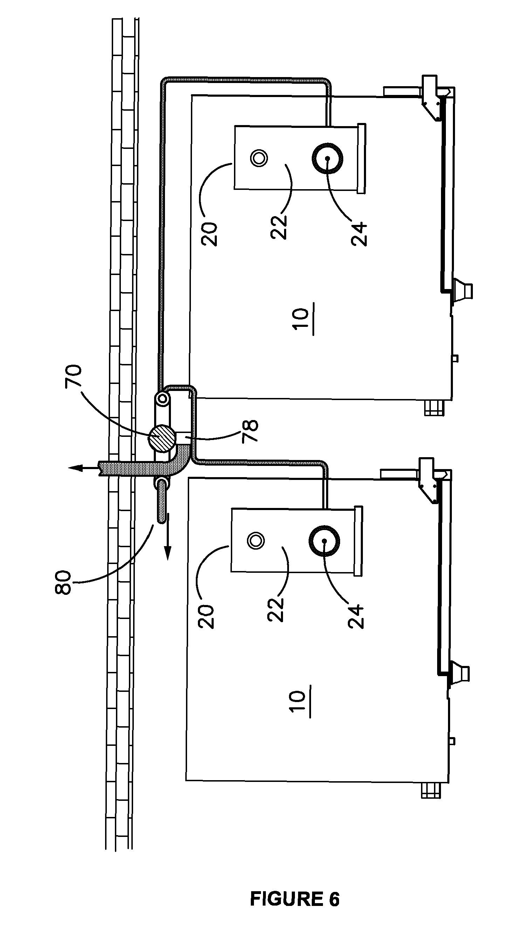

Figure 6 shows a commercial oven arrangement with 2 separate ovens, each with their own collection device. Each separate collection device is connected to the same liquid-liquid separator.

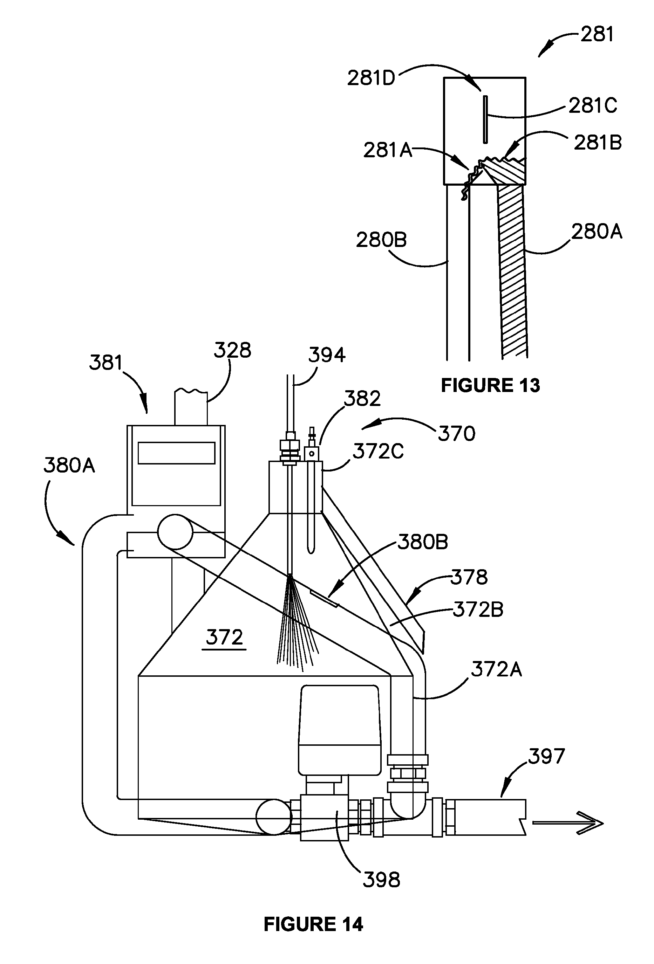

Figure 13 is a cross-section view of a weir box 281 which is an alternative form of overflow. The weir box 281 receives water from outlet pipe portion 280A and includes an edge 281A over which the water flows, to define a free surface 281 B, and continue on its way towards a drain or sewer (not shown in Figure 13) via the outlet pipe portion 280B. The operation of the weir box 281 is analogous to the operation of the overflow 181 illustrated in Figures 10 and 11 in that the relative height of the edge 281A (and the free surface 281B defined thereby) above a water outlet (not shown in Figure 13) regulates the pressure at the water outlet.

Figure 13 illustrates the weir box 281 in its normal operating position. In the lipid removal mode, a member 281C in the form of a simple plate-like vertical blade is lowered to abut the edge 281A. In this position, as liquid is supplied to the main chamber of the vessel (not shown in Figure 13) the free surface 281B rises until the water spills over an upper edge 281 D of the member 281 C and thus the pressure at the water outlet from the main chamber is increased. It will be appreciated that the member 281C need not sealingly engage the edge 281A; all that is required is that these portions cooperate so that the free surface 281 B is elevated.

Figure 14 illustrates an alternative form of separator 370. The separator 370 is configured to sit below an oven and to receive cooking by product from the oven via the an inlet pipe 328, without an intermediate collection device as in the previously described embodiments.

The inlet 328 opens into a main chamber 372. The main chamber 372 has a larger capacity than the separators of the other embodiments in order to accommodate the volume of fluid which would otherwise be stored in the intermediate collection device. The chamber 372 is sized to hold 1 day's fat input.

In this embodiment the main chamber 372 has a lower squat upright cylindrical section 372A capped by a frusto conical section 372B which is in turn capped by a short smaller diameter cylindrical section 372C.

An outlet pipe 378 extends from the top cylindrical section 372C, and probes 382 and cleaning jet 394 are carried by the section 372C. The operation of the outlet pipe 378, the probes 382 and cleaning 394 is closely analogous to the previously described embodiments.

An outlet pipe portion 380A extends from an outlet (not shown) mounted low in the main chamber 372 to a weir box 381. An outlet pipe portion 380B extends from the weir box 381 down to waste pipe 397. The operation of the outlet pipe and weir box is closely analogous to the previously described embodiments.

The separator 370 includes a heater, and a thermocouple arranged to monitor the temperature of the fluid within the main chamber 370, to ensure that the fluid within the main chamber 372 is maintained in a liquid state. A temperature between 65 and 70 degrees Celsius is typically preferred.

The separator 370 works with the Convotherm^{™} oven built by Moffat^{™} which is used for the express baking of chickens. The separator 370 is intended to be emptied each night and generates an error signal when it is nearing full. The oven uses a great deal of steam during the baking cycle and the condensate from the steam can be as high as 100 litres of water per oven per hour. The separator 370 can be linked to one or two ovens and the operation of the separator 370 is as follows:
A. Heats water in the chamber 372 to 65 degrees and regulates the water at that temperature plus or minus 1 degree Celsius by way of the heating element.
B. Permits fat to separate from the water within the chamber 372 so that the fat can be dumped at suitable intervals into a storage container (not shown).
C. Permits the water containing soluble fats and proteins to be drained away by way of hose 397.
D. The ovens have an automatic cleaning cycle wherein cleaning compounds and neutraliser are pumped through the oven and then to the tower. The tower is cleaned therefore using the compounds and the entire tower is then spray washed and its contents dumped to waste automatically using an automated valve 398.

The separator includes a controller (not shown) which includes an electronic board and is capable of:
A. Monitoring water temperature by use of the thermocouple.
B. Switching the heating element (which has a 600W capacity) on and off to keep the water at required temperature.
C. Receive a signal indicative of the existence of water or fat or air at two levels at the top of the chamber 372 using the probes which are formed of stainless steel.
D. Drive a 24 volt DC motor (not shown) to a position either top dead centre or bottom dead centre. The motor drives a crank (not shown) that in turn moves a weir assembly thus raising or lowering the water level within the tower.
E. Receiving data from two proximity switches to determine that the DC motor is at TDC or BDC.
F. Open a solenoid valve to supply fluid to the spray nozzle for a period of time to spray hot water (from mains hot water) through the tower during cleaning cycle.
G. Open and close a motorised ball valve 398 during the cleaning cycle for pre-determined intervals.
H. Drive a series of LED lights to warn the operator and/or service person of any of the faults listed:
   (i) top sensor fault
   (ii) bottom sensor fault
   (iii) water delivery fault
   (iv) fat dump fault
   (v) BDC or TDC proximity fault
I. Receiving instruction by way of electronic switching from either oven to signal that the oven is operating, standing idle, turned off, or in cleaning mode (three steps - chemical clean, neutraliser wash, rinse).

It will be understood that the invention disclosed and defined in this specification extends to all alternative combinations of two or more of the individual features mentioned or evident from the text or drawings. All of these different combinations constitute various alternative aspects of the invention.

## Claims

1. A liquid separator including
a vessel (172) in which liquid separates into a lower density fraction floating atop a denser fraction;
an inlet (174) to receive the liquid into the vessel;
a first outlet (176) to convey the denser fraction from the vessel;
a second outlet (178) positioned above the first outlet to convey the floating lower density fraction from the vessel;
**characterised by**
a regulating mechanism (180) to regulate the pressure at the first outlet; and
a removal mechanism (182, 184, 199) including one or more sensors (184), to sense the floating lower density fraction at a first predetermined level above the first outlet, and being responsive to the sensor(s) to remove the floating lower density fraction from the vessel.

2. The separator of claim 1 wherein the removal mechanism controls the regulating mechanism to increase the pressure at the first outlet to remove the floating lower density fraction from the vessel.

3. The separator of claim 1 or 2 wherein the regulating mechanism includes a conduit 180 extending from the first outlet to an overflow (181) above the first outlet.

4. The separator of any one of claims 1 to 3 wherein the removal mechanism includes an openable closure 86 for selectively closing the second outlet.

5. The separator of any one of claims 1 to 4 wherein the first predetermined level is below a free surface of liquid in the vessel.

6. The separator of any one of claims 1 to 5 including one or more further sensors (184) to detect the denser fraction at a second predetermined level vertically spaced from the first predetermined level;
wherein the removal mechanism is responsive to the further sensor(s) to discontinue the removal of the lower density fraction from the vessel.

7. The separator of any one of claims 1 to 6 including a heater (184).

8. A method of treating a liquid, the method including
supplying the liquid to a vessel (172) in which the liquid separates into a lower density fraction floating atop a denser fraction;
removing the denser fraction from the vessel;
**characterised by**
regulating the pressure at a location in the vessel; and
removing the floating lower density fraction from the vessel in response to sensing the floating lower density fraction at a first predetermined level above the location in the vessel.

9. The method of claim 8 wherein the removing of the floating lower density fraction includes increasing the pressure at the location in the vessel.

10. The method of claim 9 wherein
removing the denser fraction from the vessel includes removing the denser fraction via a first outlet (176); and
the increasing the pressure at the location in the vessel includes elevating an overflow (181) downstream of the first outlet.

11. The method of claim 10 wherein the elevating the overflow includes elevating structure (181) over which fluid flows.

12. The method of claim 10 wherein the elevating the overflow includes lowering a member (281 C) onto structure (281A) over which fluid flows.

13. The method of any one of claims 8 to 12 wherein the removing the lower density fraction from the vessel includes opening an outlet (86) for the lower density fraction to pass therethrough.

14. The method of any one of claim 8 to 13 wherein the first predetermined level is below a free surface of liquid in the vessel.

15. The method of any one of claims 8 to 14 further including discontinuing the removal of the lower density fraction in response to sensing the denser fraction at a second predetermined level vertically spaced from the first predetermined level.
